# EUROPEAN PATENT APPLICATION

(11) **EP 4 064 580 A1**
(43) Date of publication of application: **28.09.2022**
(21) Application number: 20889296.8
(22) Date of filing: 19.11.2020
(51) Int. Cl.: H04B 5/02, H04B 1/59, G06F 13/10

(54) **DATA ACCUMULATING SYSTEM AND DATA ACCUMULATING METHOD**

(30) Priority: 20.11.2019 JP 2019209867
(71) Applicant: Kyocera Corporation, Kyoto-shi Kyoto 612-8501 (JP)
(72) Inventor: NAKAMITSU, Sho, Kyoto-shi, Kyoto 612-8501 (JP); SATO, Yohei, Kyoto-shi, Kyoto 612-8501 (JP)
(74) Representative: TBK
(86) International application number: PCT/JP2020/043185
(87) International publication number: WO 2021/100806

(57) **Abstract**

A first controller included in a data recorder automatically starts transmission of data in response to contactless communication being enabled between a first communication module included in the data recorder and a second communication module included in a communication device. First control A3 includes automatically starting transmission of the data in response to contactless communication being enabled between the first communication module and the second communication module.

## Description

### FIELD

The present disclosure relates to a data accumulation system and a data accumulation method that simplify data transfer.

### BACKGROUND

A known system for transmitting and receiving information signals is described in, for example, Patent Literature 1.

### CITATION LIST

### PATENT LITERATURE

Patent Literature 1: Japanese Unexamined Patent Application Publication (Translation of PCT Application) No. 2002-512739

### BRIEF SUMMARY

A data accumulation system according to an aspect (first aspect) of the present disclosure includes a data recorder including a first communication module for contactless communication, and a communication device including a second communication module for contactless communication with the first communication module. The communication device outputs a data transmission request signal and accumulates data. The data recorder further includes a first storage that stores data to be transmitted from the first communication module to the second communication module, and a first controller that controls the first communication module to start transmission of the data in response to the data transmission request signal transmitted from the communication device to the data recorder. The first controller starts transmission of the data from the first communication module to the second communication module in response to contactless communication being enabled between the first communication module and the second communication module.

A data accumulation system according to another aspect (second aspect) of the present disclosure includes a data recorder including a first communication module for contactless communication, and a communication device including a second communication module for contactless communication with the first communication module. The communication device accumulates data. The data recorder further includes a first storage that stores data to be transmitted from the first communication module to the second communication module, and a first controller that controls the first communication module to start transmission of the data in response to a data transmission inquiry signal transmitted to the communication device. The first controller starts transmission of the data from the first communication module to the second communication module in response to the contactless communication being enabled between the first communication module and the second communication module.

A data accumulation method according to still another aspect of the present disclosure is a method implementable with a data accumulation system. The system includes a data recorder including a first communication module for contactless communication, and a communication device including a second communication module for contactless communication with the first communication module. The communication device outputs a data transmission request signal and accumulates data. The data accumulation method includes storing data to be transmitted from the first communication module to the second communication module, and controlling the first communication module to start transmission of the data in response to the data transmission request signal. The controlling includes starting transmission of the data from the first communication module to the second communication module in response to contactless communication being enabled between the first communication module and the second communication module.

### BRIEF DESCRIPTION OF DRAWINGS

FIG. 1 is a block circuit diagram of a data accumulation system according to one or more embodiments of the present disclosure.
FIG. 2 is a conceptual diagram of the data accumulation system according to one or more embodiments of the present disclosure.
FIG. 3A is an example flowchart of a data accumulation method according to one or more embodiments of the present disclosure.
FIG. 3B is another example flowchart of the data accumulation method according to one or more embodiments of the present disclosure.

### DETAILED DESCRIPTION

The structure that forms the basis of a data accumulation system according to one or more embodiments of the present disclosure will be described first. A data recorder, also referred to as a data logger, records detection data from devices such as sensor devices. The detection data is stored in an internal memory of the data recorder or transmitted to a communication device or a server having a large-capacity memory. A known technique uses, for example, contactless communication to transfer data from an internal memory included in a data recorder to a communication device having a large-capacity memory.

However, such a data recorder included in a portable sensor or another device may not be always in an environment enabling communication with the communication device. More specifically, when the portable sensor including the data recorder is being transported or is located distant from the communication device, or is blocked by an obstacle such as a wall located between the portable sensor and the communication device, the portable sensor is not in an environment enabling communication with the communication device. Moreover, the data recorder is to store a large volume of detection data in its internal memory having a limited memory capacity.

The detection data stored in the internal memory of the data recorder is to be manually transferred to the large-capacity memory in the communication device in an environment enabling communication between the data recorder and the communication device. The manual transfer of the detection data to the large-capacity memory is to be performed before the internal memory lacks storage capacity. Some systems, such as a system constantly detecting and storing the detection data, use more frequent transfer of the detection data. The increased frequency in manual transfer of the detection data increases the workload of an operator.

When the system constantly detecting and storing the detection data is continuously not in an environment enabling the data recorder to communicate with the communication device, the data recorder continues to store the detection data in its internal memory, possibly causing an overflow and a capacity shortage of the internal memory. Thus, the operator is to continuously monitor or periodically check the capacity status of the internal memory in the data recorder and readily transfer the detection data manually once an environment enabling the communication is restored. Such continuous monitoring or periodic checking of the capacity status of the internal storage in the data recorder also increases the workload of the operator.

Thus, a data accumulation system that simplifies data transfer processes and a data accumulation method with simplified data transfer processes are to be developed.

A data accumulation system and a data accumulation method according to one or more embodiments of the present disclosure will now be described with reference to the accompanying drawings.

### Data Accumulation System

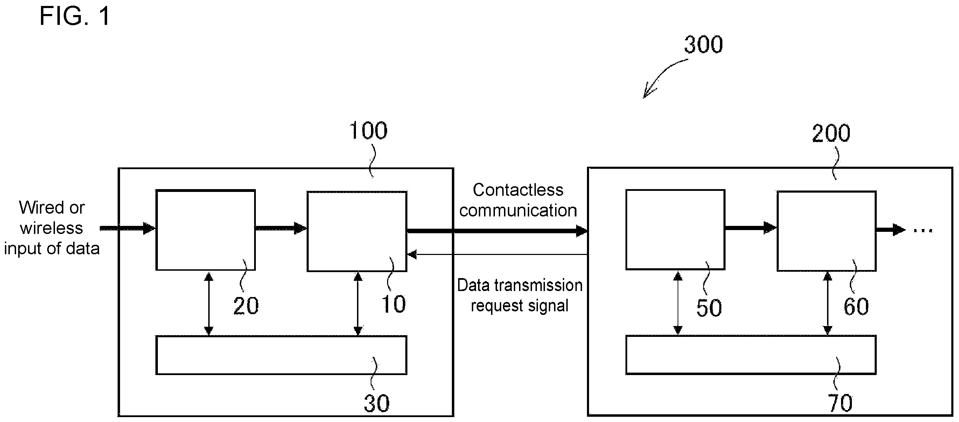

FIG. 1 is a block circuit diagram of a data accumulation system 300 according to one embodiment of the present disclosure. In FIG. 1, the thick arrows indicate the flow of data, and the thin arrows indicate the flow of control signals.

The data accumulation system 300 according to the present embodiment includes a data recorder 100 including a first communication module 10 for contactless communication, and a communication device 200 including a second communication module 50 for contactless communication with the first communication module 10. The communication device 200 transmits a data transmission request signal and also accumulates data. The data recorder 100 further includes a first storage 20 for storing data to be transmitted from the first communication module 10 to the second communication module 50, and a first controller 30 for controlling the first communication module 10 to start transmission of the data in response to the data transmission request signal transmitted from the communication device 200 to the data recorder 100. The first controller 30 starts transmission of the data from the first communication module 10 to the second communication module 50 in response to contactless communication being enabled between the first communication module 10 and the second communication module 50.

For the data accumulation system and the data accumulation method according to one or more embodiments of the present disclosure, contactless communication refers to a communication method, such as wireless communication using radio waves (electromagnetic waves), visible light communication using visible light, infrared communication, or ultrasonic communication, including no mechanical contact or connection such as a communication cable for communication between communication devices. Hereafter, contactless communication being wireless communication in the present embodiment will be described.

The first communication module 10, the first storage 20, and the first controller 30 are electrically connected to one another. The communication device 200 may further include a second storage 60 and a second controller 70. The second communication module 50, the second storage 60, and the second controller 70 are electrically connected to one another.

The data recorder 100 may record various items of data including image data, sound data, voice data, temperature data, humidity data, luminance data, illuminance data, and electrical resistance data.

The data recorder 100 may obtain temperature or other data from measurement targets such as cells in a culture medium and record (store) the data temporarily. The data recorder 100 may be referred to as, for example, a wireless sensor chip or a wireless sensor device. The communication device 200 may be a server, a personal computer, or a communication device with a large-capacity memory that receives and accumulates the data transmitted from the data recorder 100. The data recorder 100 and the communication device 200 may be separate devices, and may be, for example, located on different substrates. The substrates may be formed from an electrically insulating material such as glass, a plastic, or a ceramic material, and may be a rectangular or circular plate in a plan view. The substrates may be light transmissive, or colored, for example, black or brown.

The data recorder 100 may be located on, for example, a first surface (e.g., an upper surface) or a second surface (e.g., a lower surface) of a first substrate. The data recorder 100 may be directly formed on the surface with a film deposition method such as chemical vapor deposition (CVD). The first substrate has, on the first surface or the second surface, an insulating layer such as an inorganic insulating layer formed from silicon oxide (SiO₂) or silicon nitride (Si₃N₄) and an organic insulating layer formed from an acrylic resin or polycarbonate. The insulating layer is formed with a film deposition method such as CVD. The first communication module 10, the first storage 20, and the first controller 30 are located on the insulating layer. In the communication device 200, the second communication module 50, the second storage 60, and the second controller 70 may be located on a second substrate having the same structure as the first substrate. The communication device 200 may be a stand-alone device such as a server described above.

The first communication module 10 may include a first antenna for wireless communication, and the second communication module 50 may include a second antenna for wireless communication. The first antenna may include connection conductors such as electrodes, wires, and through-holes, and a circuit located on the first surface, the second surface, or the insulating layer, or between the insulating layers of the first substrate. The second antenna may include connection conductors such as electrodes, wires, and through-holes, and a circuit located on the first surface, the second surface, or the insulating layer, or between the insulating layers of the second substrate. This allows integrated placement of the first antenna, the second antenna, and other circuits on the first substrate and the second substrate, and also achieves smaller substrate areas. With connection conductors such as electrodes, wires, and through-holes and circuits between the insulating layers, the data recorder 100 located, for example, in corrosive measurement targets such as an acidic liquid culture medium may have higher corrosion resistance in the measurement targets.

The first antenna and the second antenna may each be, for example, a loop antenna or a dipole antenna. In some embodiments, the first antenna and the second antenna may each be a loop antenna with an antenna length easily adjustable and higher reception sensitivity.

The first storage 20 and the second storage 60 can store programs and data. The first storage 20 and the second storage 60 may also serve as work areas for storing processed data temporarily. The first storage 20 and the second storage 60 include recording media. The recording media may include any non-transitory recording medium, such as a semiconductor storage or a magnetic storage. The first storage 20 and the second storage 60 may also include multiple different storage media. The first storage 20 and the second storage 60 may include a combination of a memory reader and a portable storage medium such as a memory card, an optical disk, or a magneto-optical disk. The first storage 20 and the second storage 60 may include a storage device used as a temporary storage area, such as a random-access memory (RAM).

In the data accumulation system and the data accumulation method according to one embodiment (first aspect) of the present disclosure, the second communication module 50 transmits a data transmission request signal to the first communication module 10. Upon receipt of the data transmission request signal by the first communication module 10, the first controller 30 may determine that contactless communication is enabled. The first storage 20 storing data to be transmitted from the first communication module 10 to the second communication module 50 may further store a data transmission starting signal corresponding to the data transmission request signal. Upon receipt of the data transmission request signal by the first communication module 10, the first controller 30 may determine that contactless communication is enabled and start data transmission. In some embodiments, upon receipt of the data transmission request signal by the first communication module 10, the first controller 30 may determine that contactless communication is enabled, and the first communication module 10 may transmit the data transmission starting signal to the second communication module 50, and data transmission may then be performed. The second storage 60 stores the data, time information, and identification (ID) information on the data recorder that have been received by the second communication module 50.

In the data accumulation system and the data accumulation method according to one or more embodiments of the present disclosure, the data transmission request signal is used to automatically start transmission of the data, for example, stored in the first storage 20 from the first communication module 10 to the second communication module 50. The data transmission request signal may be used to automatically start transmission of the data stored in the first storage 20 from the first communication module 10 to the second communication module 50 upon receipt of the data transmission request signal by the first communication module 10 from the second communication module 50. The data transmission request signal may be used to automatically start transmission of the data stored in the first storage 20 from the first communication module 10 to the second communication module 50 in accordance with at least one of the time information on data transmission or the ID information that the second communication module 50 has received from the first communication module 10.

In the data accumulation system according to one embodiment (second aspect) of the present disclosure, the first storage 20 storing the data to be transmitted from the first communication module 10 to the second communication module 50 may further store a data transmission inquiry signal to inquire whether data transmission may be started. The data transmission inquiry signal is used to automatically start transmission of the data, for example, stored in the first storage 20 from the first communication module 10 to the second communication module 50. The data transmission inquiry signal may be used to automatically start transmission of the data stored in the first storage 20 from the first communication module 10 to the second communication module 50 upon receipt of the data transmission inquiry signal by the second communication module 50 from the first communication module 10. In this case, the second communication module 50 that has received the data transmission inquiry signal from the first communication module 10 transmits a data transmission permission signal to the first communication module 10. Upon receipt of the data transmission permission signal by the first communication module, the first controller 30 determines that contactless communication is enabled and may start data transmission. The data transmission inquiry signal may be used to automatically start transmission of the data stored in the first storage 20 from the first communication module 10 to the second communication module 50 in accordance with at least one of the time information on data transmission or the ID information that the second communication module 50 has received from the first communication module 10.

To automatically start transmission of the data refers to starting transmission of the data stored in the first storage 20 from the first communication module 10 to the second communication module 50 through contactless communication, for example, without any manual operation by an operator or any other operations.

The time information may be, for example, the time when the first storage 20 starts storing data, the time when the data is stored, the time when storage of the data is ended, and any other time.

The ID information may be numerals for identifying the data recorder 100, such as specific numbers on the data recorder 100, or any other information.

In the data accumulation system and the data accumulation method according to one or more embodiments of the present disclosure, the second communication module 50 may transmit the data transmission request signal to the first communication module 10 periodically. Transmitting the data transmission request signal periodically refers to transmitting the data transmission request signal repeatedly at specific intervals, for example, every second, every minute, every hour, or every day.

The data transmission request signal may be initially transmitted to the first communication module 10 when the residual capacity (unused capacity) of the first storage 20 in the data recorder 100 reaches a predetermined value (e.g., residual capacity is 50%). The data transmission request signal may be transmitted to the first communication module 10 each time the residual capacity reaches 40%, 30%, 20% and 10%. This structure easily reduces a capacity shortage and an overflow of the first storage 20. In the communication device 200 that monitors the residual capacity of the first storage 20, the second storage 60 may store a correlation data table between lapsed time of the operation of the data recorder 100 and the residual capacity of the first storage 20 to estimate the residual capacity of the first storage 20 based on the lapsed time. Once the first communication module 10 completes transmitting data to the second communication module 50, the next transmission of the data transmission request signal to the first communication module 10 may be suspended until the residual capacity of the first storage 20 reaches a predetermined value (e.g., residual capacity is 50%).

As described above, the second communication module 50 that periodically transmits the data transmission request signal to the first communication module 10 may transmit a first data transmission request signal while contactless communication is disabled. When contactless communication is continuously being disabled, the second communication module 50 subsequently transmits a second data transmission request signal, then a third data transmission request signal, and subsequent signals successively. In this case, the interval between the first data transmission request signal and the second data transmission request signal (Ty1) may be longer than the interval between the second data transmission request signal and the third data transmission request signal (Ty2). In other words, Ty2 may be shorter than Ty1. As expressed with Ty1 > Ty2 > Ty3 > ... > Tyn (n is an integer greater than or equal to 2), each interval may be shorter than its preceding interval until contactless communication is enabled. This increases the likelihood of enabling contactless communication, or the probability of establishing contactless communication. This structure easily reduces a capacity shortage and an overflow of the first storage 20.

For example, each interval may be one-half the preceding interval. The multiplying factor may be any other value. This may be a control that exponentially shortens the intervals. The exponential function for this control is expressed, for example, with f(x) = a^{x} (a is a constant of 0 < a < 1, such as 0.5, and x is a variable that is the time or the number of the signals). The intervals may also be shorter in polynomial time. The polynomial time may be expressed, for example, with f(x) = x^{b} (b is a negative integer, such as -2). This represents a slower change than with the exponential function. The control that shortens the intervals in polynomial time and the control that exponentially shortens the intervals may be combined. For example, the first half (e.g., about 30 to 70% of the total) may use the slower control that shortens the intervals in polynomial time whereas the second half (e.g., 70 to 30% of the total) may use the more rapid control that exponentially shortens the intervals. The probability of establishing contactless communication further increases during the second half.

The second communication module 50 may transmit the data transmission request signal to the first communication module 10 until contactless communication is enabled. Each signal may have a longer signal length than the preceding signal. This structure is more likely to enable contactless communication, or increases the probability of contactless communication being enabled. This structure thus easily reduces a capacity shortage and an overflow of the first storage 20. For example, each signal may be two times longer than its preceding signal. The multiplying factor may be any other value. This may be a control that exponentially increases the signal length. The exponential function is expressed, for example, with f(x) = a^{x} (a is a constant of 1 < a and may be 2, and x is a variable that is the time or the number of the signals). The signal may also be longer in polynomial time. Polynomial time may be expressed, for example, with f(x) = x^{b} (b is a positive integer, such as 2). This represents a slower change than in the exponential function. The control that increases the signal length in polynomial time and the control that exponentially increases the signal length may be combined. For example, the first half (e.g., about 30 to 70% of the total) may use the slower control that increases the signal length in polynomial time whereas the second half (e.g., about 70 to 30% of the total) may use the more rapid control that exponentially increases the signal length. The probability of establishing contactless communication further increases during the second half.

The second communication module 50 may transmit the data transmission request signal to the first communication module 10 until contactless communication is enabled. Each signal may have a higher signal strength than its preceding signal. This sequential increase in the signal strength steadily increases the probability of establishing contactless communication, thus easily reducing a capacity shortage and an overflow of the first storage 20. For example, when the data recorder 100 and the communication device 200 are located distant from each other, or located several tens of meters to several hundreds of meters or more apart, the data transmission request signal is less likely to arrive at the first communication module 10. In this case, however, increasing the signal strength sequentially increases the probability of establishing contactless communication steadily. For example, each signal may have a signal strength two times higher than its preceding signal. The multiplying factor may be any other value. With this control, the signal strength increases exponentially. The exponential function is expressed, for example, with f(x) = a^{x} (a is a constant of 1 < a and may be 2, and x is a variable that is the time or the number of the signals). The strength of the signal may be increased in polynomial time. Polynomial time may be expressed, for example, with f(x) = x^{b} (b is a positive integer, such as 2). This represents a slower change than with the exponential function. The control that increases the signal strength in polynomial time and the control that exponentially increases the signal strength may be combined. For example, the first half (e.g., about 30 to 70% of the total) may use the slower control that increases the signal strength in polynomial time whereas the second half (e.g., about 70 to 30% of the total) may use the more rapid control that exponentially increases the signal strength. The probability of establishing contactless communication further increases during the second half.

The second communication module 50 may transmit the data transmission request signal to the first communication module 10 until contactless communication is enabled. Each signal may have a lower frequency (or a longer wavelength) than the preceding signal. When an obstacle such as a wall is located between the data recorder 100 and the communication device 200, sequentially transmitting the data transmission request signal having a longer wavelength than the preceding signal increases the chance for the signal to go beyond or around the obstacle. This steadily increases the probability of establishing contactless communication, thus easily reduces a capacity shortage and an overflow of the first storage 20. For example, each signal may have a frequency one-half the frequency of its preceding signal. The multiplying factor may be any other value. With this control, the frequency may be lower exponentially. The exponential function for this control is expressed, for example, with f(x) = a^{x} (a is a constant of 0 < a < 1, such as 0.5, and x is a variable that is the time or the number of the signals). The frequency may also be lower in polynomial time. The polynomial time may be expressed, for example, with f(x) = x^{b} (b is a negative integer, such as -2). This represents a slower change than with the exponential function. The control that lowers the frequency in polynomial time and the control that exponentially lowers the frequency may be combined. For example, the first half (e.g., about 30 to 70% of the total) may use the slower control that lowers the frequency in polynomial time whereas the second half (e.g., about 70 to 30% of the total) may use the more rapid control that exponentially lowers the frequency. The probability of establishing contactless communication further increases during the second half.

The data recorder 100 may include an auxiliary storage with a large capacity to reduce a capacity shortage and an overflow of the first storage 20. The auxiliary storage may be a semiconductor storage such as a semiconductor memory card or a semiconductor memory device with a RAM, a magnetic storage such as a magnetic disk, an optical storage such as an optical disk, or a magneto-optical storage such as a magneto-optical disk. When, for example, the first storage 20 has no further capacity unused and contactless communication is being disabled, the data stored in the first storage 20 is transferred to the auxiliary storage and stored temporarily. The temporarily stored data is then transferred to the communication device 200 once contactless communication is enabled. The first controller 30 may control the temporary storing of the data.

The control described above, or specifically, the control for sequentially shortening the intervals, the control for sequentially increasing the signal length, the control for sequentially increasing the signal strength, and the control for sequentially lowering the frequency may be combined in any manner.

To facilitate successful communication between the data recorder 100 and the communication device 200, a relay may be located between the data recorder 100 and the communication device 200. The relay may be located on a carrier, such as a tray, a multilayer tray, a pushcart, or an automobile, for carrying one or more data recorders 100. The relay may be located on an antenna or a utility pole at the site of a facility such as a laboratory facility, a research facility, or a storage facility. The relay may be located in a building of the above facilities or in a room of the building. The relay may be located on a flying machine that can fly or stay in the air, such as a drone. The relay may also increase the strength of the signal carrying the data to be transferred from the data recorder 100 to the communication device 200.

The data in the data recorder 100 may be compressed and stored when the unused capacity of the first storage 20 decreases to a predetermined value (e.g., 50%) or less. An example operation of data compression and storage will be described below. For data to be stored with addresses, each piece of data is stored with the corresponding one of the first to n-th addresses (n is an integer greater than or equal to 2). After each piece of data is stored with the corresponding one of the first to n-th addresses, the first storage 20 with any unused capacity proceeds to the second operation and stores each piece of data with the corresponding one of the first to n-th addresses. This operation is repeated m times (m is an integer greater than or equal to 2). In the second and subsequent operations, the first storage 20 does not store, for the same address, a piece of data with the same value as the value stored in the first operation. In other words, in the second and subsequent operations, the first storage 20 stores, for each address, data with a different value from the data stored in the first operation and performs data compression and storage. The first controller 30 may control data compression and storage.

Another operation of data compression and storage will be described below. For example, when each piece of data may be stored in eight bits, a low-level (low-volume) piece of data that does not use all the eight bits (e.g., a piece of data can be stored in four bits) may be stored in four bits. The first controller 30 may determine the volume (the number of bits) of each piece of data.

To control the data compression and storage described above, a machine learning model built with a neural network program (also referred to as a multilayer perceptron program), commonly known as an artificial intelligence (AI) program, may be used. The machine learning model may be a deep learning model. Training data (also referred to as supervisory data) for building the machine learning model may include the entire storage capacity available in the first storage 20. The training data may include the compressed capacity and the compression rate of each piece of data in the first to n-th addresses stored in the second operation (second cycle) or subsequent operations with respect to the corresponding piece of data in the first to n-th addresses stored in the first operation (first cycle). The compressed capacity, which is expressed in bits or bytes, is the capacity for unstored data that has the same values stored in the first cycle and thus has not been stored in a certain cycle. The compression rate is the ratio of capacity for the unstored data capacity to the capacity for the data that is to have been stored entirely without any unstored data (with no data compression storage being used), and is expressed as (unstored data capacity)/(fully-stored data capacity). A higher compression rate means more pieces of data with the same values as stored in the first operation, indicating that the data varies less widely. A lower compression rate means fewer pieces of data with the same values as stored in the first operation, indicating that the data varies widely. The compression rate may be expressed as the ratio of the capacity for the unstored data to the capacity for the stored data in a certain cycle, and may be expressed as (unstored data capacity)/(stored data capacity).

Over the cycles for obtaining data, the compression rate may be almost constant or may change linearly or nonlinearly. Such changes in the compression rate, or time-series data about the compression rate, may be used by a machine learning model to autonomously derive the laws and rules in the conditions during data changes or the rate of data changes and to predict changes in data. The time-series data about the compression rate may be collected throughout the data obtaining period in which the data is compressed and stored, or may be collected over a part of the data obtaining period in which the data is compressed and stored, for example, over the period in which the first storage 20 has a predetermined unused capacity (e.g., 50 to 40% inclusive).

When the first storage 20 has no further unused capacity, or in other words, when the storing operation for the entire capacity is complete, the training data may include the data obtaining time (T1) used for obtaining data, the compression control time (T2) used for controlling compression, the data transfer time (T3), and the decompression time (T4) used for decompressing the compressed data to be displayed on image devices. The data obtaining time T1 is longer when more data is compressed and stored and thus the number of cycles (the number of times data is obtained) increases. The compression control time T2 is longer when more data is compressed and stored. The data transfer time T3 is constant irrespective of whether data is compressed, when the first storage 20 has a constant storage capacity. The decompression time T4 is longer when more data is compressed and stored.

The efficiency of the operation from obtaining data to displaying data can be increased based on the storage capacity of the first storage 20, the compression rate, and the times T1 to T4. The operational efficiency without data compression storage (Ed1) is expressed as Ed1 = (the number of cycles for obtaining data)/(T1 + T3), and the operational efficiency with data compression storage (Ed2) is expressed as Ed2 = (the number of cycles for obtaining data)/(T1 + T2 + T3 + T4). The machine learning model may use the change in compression rate, the data compression storage Ed1, and the data compression storage Ed2 to determine either the operation without data compression storage (operation 1) or the operation with data compression storage (operation 2) is more efficient, or in other words, either of the operations has more cycles for obtaining data per unit time. This allows selection of the more efficient operation from operation 1 and operation 2.

With operation 2 being selected, the machine learning model may infer the most efficient time point to start data compression and storage. In the first storage 20, for example, the unused capacity decreases from 90 to 10% over time. The machine learning program may infer the most efficient time point to start data compression and storage and start data compression and storage at the inferred point.

The neural network program for building the machine learning model may be stored in the data recorder 100 or the communication device 200, or in an external control device or another device. The neural network program, or the multilayer perceptron program, may include several tens of layers (hidden layers) or more layers, or 100 layers or more and 1,000 layers or more as appropriate. The training data may include about 1,000 or more pieces of training data, 10,000 or more pieces, or 100,000 or more pieces as appropriate.

The data accumulation system according to the second aspect of the present disclosure may have the structure similar to the structure described above. More specifically, the first communication module 10 may periodically transmit the data transmission inquiry signal to the second communication module 50. In this case, the first communication module 10 may transmit a first data transmission inquiry signal while contactless communication is disabled. When contactless communication is continuously being disabled, the first communication module 10 subsequently transmits a second data transmission inquiry signal, then a third data transmission inquiry signal, and subsequent signals successively. In this case, the interval (Ts1) between the first data transmission inquiry signal and the second data transmission inquiry signal may be longer than the interval (Ts2) between the second data transmission inquiry signal and the third data transmission inquiry signal. In other words, the interval Ts2 may be shorter than the interval Ts1. As expressed with Ts1 > Ts2 > Ts3 > ... > Tsn (n is an integer greater than or equal to 2), each interval may be shorter than its preceding interval until contactless communication is enabled. This reduces a capacity shortage and an overflow of the first storage 20 further.

The second communication module 50 that periodically transmits the data transmission request signal to the first communication module 10 may transmit a first data transmission request signal while contactless communication is disabled. The second communication module 50 may subsequently transmit a second data transmission request signal. In this case, the second data transmission request signal may have a higher strength (also referred to as an output, a level, or an amplitude strength) than the first data transmission request signal. This structure is more likely to enable contactless communication between the data recorder 100 and the communication device 200 that are located distant from each other, for example, located several tens of meters to several hundreds of meters or more apart. In some embodiments, a second radio wave serving as the second data transmission request signal may have a longer wavelength than a first radio wave serving as the first data transmission request signal. Although an obstacle against radio waves may be located between the data recorder 100 and the communication device 200, the second radio wave with a longer wavelength is more likely to be diffracted and pass around the obstacle to arrive at the communication device 200. This structure is more likely to enable contactless communication. Further, the second data transmission request signal may have a higher strength and a longer wavelength than the first data transmission request signal. This structure is more likely to enable contactless communication.

When contactless communication is still disabled after transmission of the second data transmission request signal, the same operation described above may be performed for the second data transmission request signal and the third data transmission request signal. More specifically, the operations described above may be repeated until contactless communication is enabled, and the operations may include increasing the signal strength sequentially or increasing the signal wavelength sequentially, or both.

The data accumulation system according to the second aspect of the present disclosure may have the structure similar to the structure described above. More specifically, the first communication module 10 may periodically transmit the data transmission inquiry signal to the second communication module 50. The first communication module 10 may transmit the first data transmission inquiry signal while contactless communication is disabled. When the first communication module 10 transmits a second data transmission inquiry signal, the second data transmission inquiry signal may have a higher strength than the first data transmission inquiry signal. The second radio wave serving as the second data transmission inquiry signal may have a longer wavelength than the first radio wave serving as the first data transmission inquiry signal. Further, the second data transmission inquiry signal may have a higher strength and a longer wavelength than the first data transmission inquiry signal. This structure is likely to enable contactless communication.

When contactless communication is still disabled after transmission of the second data transmission inquiry signal, the same operation described above may be performed for the second data transmission inquiry signal and the third data transmission inquiry signal. More specifically, the operations described above may be repeated until contactless communication is enabled, and the operations may include increasing the signal strength sequentially or increasing the signal wavelength sequentially, or both.

To reduce a capacity shortage and an overflow of the first storage 20, the data recorder 100 may include multiple first storages 20. One of the multiple first storages 20 may be used mainly, and the other storages may be redundant for use in an overflow.

The first communication module 10 transmits the data to the second communication module 50 when the first communication module 10 is in an environment enabling reception of the data transmission request signal. The environment enabling reception of the data transmission request signal corresponds to an environment that avoids particular conditions disabling signal reception, for example, the data recorder 100 is being transported, the data recorder 100 and the communication device 200 are located distant from each other, or an object such as a wall that interferes communication is located between the data recorder 100 and the communication device 200.

To maintain the first communication module 10 in an environment enabling reception of the data transmission request signal, a relay may be located between the data recorder 100 and the communication device 200. The relay and at least one of the data recorder 100 or the communication device 200 may be connected with a communication cable or another connection for communication through connections. For example, the relay connected to the communication device 200 through a communication cable may be located near the data recorder 100 or in the room in which the data recorder 100 is located. In this case, when the data recorder 100 being moved or transported remains close to the relay or within the room in which the relay is located, the first communication module 10 is more likely to be in an environment enabling reception of the data transmission request signal. The relay may be a router used for wireless or wired communication of personal computers (PCs), a smartphone, a smartwatch, or another device. The communication cable may be a telephone cable, an optical fiber cable, or another cable.

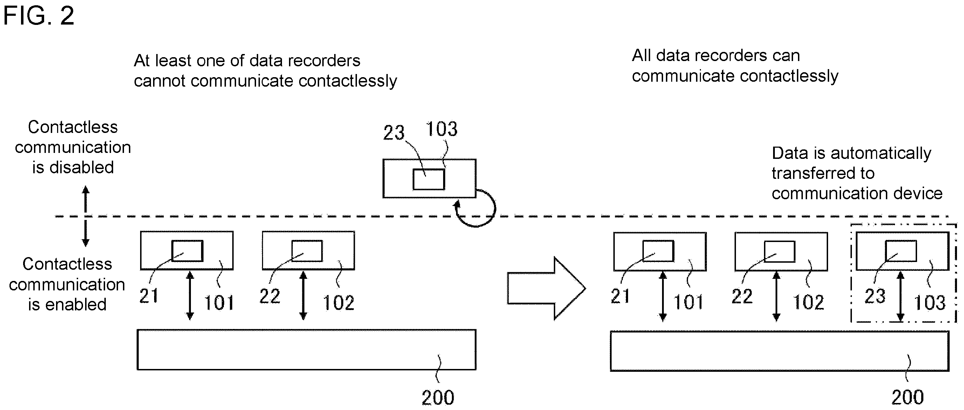

FIG. 2 shows example contactless communication in the data accumulation system 300 according to an embodiment of the present disclosure. In FIG. 2, double-headed arrows represent contactless communication, and an open circle arrow represents that data is stored simply in a first storage 23 in a data recorder 103.

As shown in FIG. 2, when at least one of the data recorders cannot communicate contactlessly, or more specifically, when data recorders 101 and 102 can communicate contactlessly with the communication device 200 whereas the data recorder 103 cannot communicate contactlessly with the communication device 200, the data recorders 101 and 102 store data into their first storages 21 and 22, and the data is then transmitted to the communication device 200. In the data recorder 103, however, data is stored simply into its first storage 23 and is not transmitted to the communication device 200.

When all data recorders can communicate contactlessly, or more specifically, when the data recorder 103 that previously cannot communicate contactlessly can perform contactless communication in addition to the data recorders 101 and 102, the data stored in the first storage 23 in the data recorder 103 is automatically transmitted to the communication device 200.

The first controller 30 determines that contactless communication is enabled when the first communication module 10 receives the data transmission request signal from the second communication module 50.

The data accumulation system 300 according to one or more embodiments of the present disclosure includes multiple data recorders 101, 102, and 103, and the communication device 200 may further include the second controller 70. The second controller 70 accesses the multiple data recorders 101, 102, and 103 at predetermined intervals to determine whether each of the multiple data recorders 101, 102, and 103 can communicate contactlessly. The second controller 70 then controls the second communication module 50 to transmit the data transmission request signal to the first communication module 10 in the data recorder determined to be in an environment enabling contactless communication from the multiple data recorders 101, 102, and 103.

In the data accumulation system 300 according to one or more embodiments of the present disclosure, the predetermined interval includes any period before the data recorder 100 lacks capacity in the first storage 20. For example, the predetermined interval may be a period from the initial operation of the data recorder 100 to the time the first storage 20 has a residual capacity of 50% as described above.

The first storage 20 may store time information on data transmission and ID information on the data recorders 101, 102, and 103.

After determining that contactless communication is enabled, the first controller 30 may control the first communication module 10 to transmit at least one of the time information on data transmission or the ID information on the data recorders 101, 102, and 103 to the second communication module 50.

The communication device 200 may further include the second storage 60 for storing the data, the time information, and the ID information that the second communication module 50 has received.

In the data accumulation system 300 according to one or more embodiments of the present disclosure, the communication device 200 may simultaneously communicate contactlessly with the multiple data recorders 101, 102, and 103. Such simultaneous communication greatly reduces the time used for the controlling operation of the multiple data recorders 101, 102, and 103 or obtaining measurement data, thus allowing a more efficient operation. While communicating with the multiple data recorders 101, 102, and 103 simultaneously and contactlessly, the communication device 200 may transmit power contactlessly at the same time. For example, a combined signal may be generated by superimposing a contactless power transmission signal of an alternating current signal having a constant amplitude and a constant frequency and a contactless communication signal such as an operation control signal. The combined signal is transmitted from the first antenna to be received at the second antenna. The combined signal is then separated by an operation control unit into the contactless power transmission signal and the contactless communication signal for individual use. Contactless power transmission and contactless communication may be performed in a time-sharing manner within a very short period of time, such as 10 to 1,000 microseconds (µsec), or substantially at the same time. Contactless power transmission and contactless communication are performed, for example, with the first antenna transmitting radio waves (electromagnetic waves) to induce a current at the second antenna by electromagnetic induction. Contactless communication in the opposite direction is performed with the second antenna transmitting radio waves (electromagnetic waves) to induce a current at the first antenna by electromagnetic induction.

The data recorder 100 in the data accumulation system 300 may further include a sensor having one or more sensor devices. The sensor devices may include at least one of pH sensor devices, temperature sensor devices, electrical resistance sensor devices, or image sensor devices. The sensor devices may also include at least one of pressure sensor devices, magnetic sensor devices, humidity sensor devices, chromaticity sensor devices, or illuminance sensor devices.

The sensor may detect the state of measurement targets, such as a cell culture medium or cells, in a vessel. The sensor may be located inside the vessel, such as a Petri dish, a flask, or a microwell plate. The vessel may have any shape or size, but may have one or more spaces suitable for cell proliferation. For example, a Petri dish may have a width or a diameter of several centimeters to several tens of centimeters and a height of several millimeters to several centimeters. A flask may have a width or a diameter of several centimeters to several tens of centimeters and a height of five to several tens of centimeters. A microwell plate may have a width or a diameter of several centimeters to several tens of centimeters and a height of 0.5 to several centimeters. The vessel may be formed from an optically transparent material, such as a plastic material or a glass material to be observable from outside.

The microwell plate has wells each in the shape of, for example, a circle, a rectangle such as a square, or a polygon such as a pentagon or a hexagon. The circular well is suitable for isometric proliferation of cells, thus allowing effective proliferation of the cells. The hexagonal well is suitable for the closest arrangement of wells, thus effectively reducing the size of the microwell plate.

More specifically, the vessel may be a commercially available cell culture vessel, such as a cell culture plate, a cell culture flask, or a cell culture dish. Each of these cell culture vessels may have a lid and may be an injection molded vessel formed from a transparent resin.

The vessel may include multiple housing sections for accommodating a liquid, such as a culture medium. Each of the housing sections may be in the shape of a cylinder or an inverted conical frustum. The sensor may be attached inside or outside the vessel with no cells or no culture medium, which then receives cells and a culture medium. In some embodiments, the sensor may be attached to the vessel accommodating cells and the culture medium. The sensor may be removed once the cells have undergone sufficient proliferation. After the cells and the culture medium are collected, the vessel may be washed and sterilized, and the sensor may be attached again.

The communication device 200 may be located outside the vessel, whereas the data recorder 100 and the sensor may be located inside the vessel. For example, the communication device 200 may be attached to the bottom surface of the vessel from outside, and the data recorder 100 and the sensor may be attached to the bottom surface of the vessel from inside. This allows the first antenna in the data recorder 100 to be located adjacent to the second antenna in the communication device 200. Thus, the signals transmitted between the first antenna and the second antenna, such as power transmission waves, sensor device control signals, or detection data signals, are less likely to be attenuated and receive less noise, thus improving the signal reception performance of the second antenna. The first substrate that forms the data recorder 100 may have a first attachment component formed from a magnet, a magnetic layer, or an adhesive layer such as a silicone resin layer on at least a part of the second surface (bottom surface facing the vessel). Facing the first attachment component, a second attachment component formed from a magnet, a magnetic layer, or an adhesive layer such as a silicone resin layer may be located on the bottom surface of the vessel. The data recorder 100 is thus attached securely at a position on the vessel. When the vessel swings during transportation, the data recorder 100 is less likely to be misaligned.

The data recorder 100 is, for example, not in contact with corrosive measurement targets such as an acidic culture medium, and thus is more durable and has a longer service life. For example, the data recorder 100 and the sensor located on the side surface of the vessel from inside may allow the inside of the vessel to be monitored easily from above or below the transparent vessel.

The substrates, or specifically the first substrate receiving the data recorder 100 and the second substrate receiving the communication device 200, may include protective layers formed from SiO₂ or Si₃N₄ on their side surfaces. With the protective layers, the side surfaces of the substrate, or more specifically the corners of the substrate, are less likely to wear, chip, or break when the side surfaces of the substrate come in contact with the inner surface of the vessel or another object. Thus, the measurement target such as a culture medium in the vessel is less likely to receive unintended objects such as pieces of the substrate. Each protective layer on the side surface of the substrate may further include an extension extending toward at least one of the first surface or the second surface of the substrate. This protects the corners of the substrate more effectively. The protective layer may be the insulating layer located on at least one of the first surface or the second surface of the substrate extending toward the side surfaces of the substrate. This also protects the corners of the substrate more effectively.

An adhesive component may be located on at least a part of at least one of the bottom surface of the vessel or the first surface (upper surface closer to the bottom surface of the vessel) of the second substrate that forms the communication device 200. The adhesive component may be formed form an adhesive layer such as a silicone resin (silicone rubber) or a double-sided tape formed by applying or printing an adhesive on both sides of a plastic tape or another object. This structure also has the same advantageous effects as described above. In some embodiments, the adhesive component may be light-transmissive to allow easier monitoring of the inside of the vessel from outside. The adhesive forces of a silicone resin result from silicone resin having a micronetwork structure attached firmly to a microscopic uneven surface of an adherend, and contacting molecules generating attractive forces, such as intermolecular forces or van der Waals forces. The adhesive is also highly attachable to the microscopic uneven surface of the adherend.

The first attachment component, the second attachment component, and the adhesive component may be located without overlapping at least one of the first antenna or the second antenna. The signals transmitted between the first antenna and the second antenna, such as power transmission signals, sensor device control signals, or detection data signals, are less likely to be attenuated and receive less noise. Thus, the second antenna may have higher reception performance to receive the signals. In some embodiments, the first attachment component, the second attachment component, and the adhesive component may be located without overlapping any of the first antenna and the second antenna.

The substrate in the shape of a circle may be appropriate for use with a vessel having a circular accommodation space in a plan view. The vessel is, for example, a cell culture plate, a cell culture flask, or a cell culture dish and is suitable for isometric cell proliferation. The vessel may be in the shape of a cylinder or an inverted conical frustum suitable for isotropic cell proliferation. An inverted conical frustum vessel is specifically suitable for three-dimensional and isotropic cell proliferation.

The cells may be of any type, including animal cells, plant cells, yeast cells, or bacterial cells. Examples of the animal cells include muscle cells, visceral cells such as the liver, blood cells such as lymphocytes, monocytes, and granulocytes, nerve cells, immune cells, and induced pluripotent stem (iPS) cells.

These cells may be tissue-derived primary cells or may be subcultured cells. iPS cells have pluripotency and the self-renewal ability. iPS cells are produced by introducing several types of genes into somatic cells, such as skin cells of a human, and culturing the cells to be pluripotent cells that can differentiate into cells of various tissues and organs, similarly to embryonic stem (ES) cells. The self-renewal ability allows iPS cells to retain pluripotency after division and proliferation, thus achieving substantially unlimited proliferation.

The cells may also be stem cells suitable for regenerative medicine. The stem cells may be pluripotent stem cells such as the iPS cells described above, or somatic stem cells such as mesenchymal stem cells (MSCs). MSCs are human stem cells present at various locations throughout the body, including bone marrow, fat, and skin. MSCs can differentiate into fat, bone, and cartilage, and also into tissue cells such as hepatocytes and neurons. MSCs are derived from bone marrow, fat, or others. Unlike iPS cells, MSCs have immunomodulatory effects and lower the likelihood of MSCs being rejected after transplantation. MSCs also have a lower possibility of tumorigenesis. Thus, the cells may be MSCs that may be used in regenerative medicine.

The data accumulation system 300 according to the present embodiment can be used to manage the number of proliferated iPS cells with high proliferative ability. The cells may be prokaryotic cells such as Escherichia coli cells, or eukaryotic cells such as animal cells or plant cells. The cells may be, for example, normal cells, abnormal cells such as tumor cells, or artificially created cells such as transgenic cells. The cells may also be cultured as part of a living tissue. The cell culture may be adherent culture or suspension culture.

The sensor device may measure, for example, the pH value or the temperature of the measurement target such as liquid in the vessel. Although the measurement target is not limited, it may be a culture medium for culturing cells. The culture medium may be a liquid culture medium or another liquid, a semisolid substance such as a gel, a jelly-like substance or an agar, or a solid substance. The liquid may be, for example, a buffer or a culture medium. Any commercially available cell culture medium may be used and is selected as appropriate for the cells to be used. The culture medium provides a growth environment for a target in culturing biological tissues such as microorganisms and cells. The culture medium is a source of nutrients such as a carbon source including glucose, a nitrogen source including peptone and ammonium sulfate, amino acids, vitamins, and inorganic salts including phosphate. The culture medium also provides a scaffold (platform) for cell proliferation. More specifically, the culture medium may be a liquid medium or a solid medium. The liquid medium includes a liquid containing the above nutrients used for cell culture. The solid medium includes the liquid that is then solidified by adding agar or gelatin. The culture medium may be, for example, a Dulbecco's modified Eagle's medium when mammalian cells are to be cultured. The culture medium may further contain additional components used for culturing the cells, such as bovine serum albumin, growth factors, amino acids, and antibiotics. Data Accumulation Method

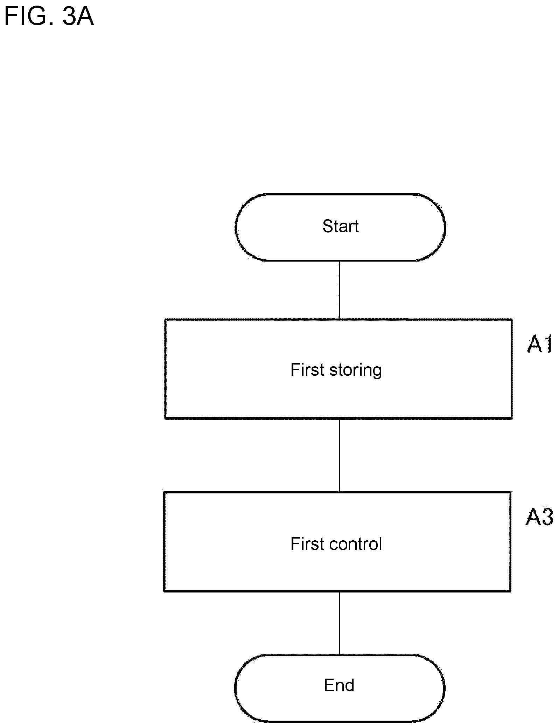

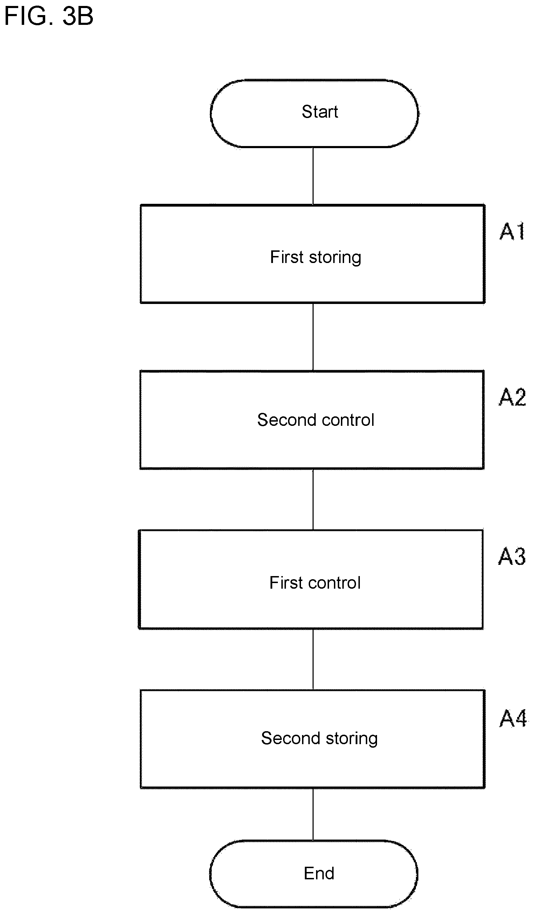

FIGs. 3A and 3B are flowcharts showing the data accumulation method according to an embodiment of the present disclosure. As shown in FIG. 3A, the data accumulation method according to one or more embodiments of the present disclosure is implementable with the data accumulation system 300 including the data recorder 100 having the first communication module 10 for contactless communication, and the communication device 200 having the second communication module 50 for contactless communication with the first communication module 10. The communication device 200 outputs the data transmission request signal. The data accumulation method includes storing the data to be transmitted from the first communication module 10 to the second communication module 50 (first storing A1) and controlling the first communication module 10 to start data transmission in response to the data transmission request signal (first control A3). The first control A3 includes starting data transmission from the first communication module 10 to the second communication module 50 in response to contactless communication being enabled between the first communication module 10 and the second communication module 50.

As shown in FIG. 3B, when the data accumulation system 300 includes the multiple data recorders 101 to 103, the data accumulation method according to one or more embodiments of the present disclosure may further include controlling the second communication module 50 (second control A2) and storing the data, the time information, and the ID information that have been received by the second communication module 50 (second storing A4). The second control A2 includes accessing the multiple data recorders 101 to 103 at predetermined intervals to determine whether each of the data recorders 101 to 103 can communicate contactlessly, and controlling the second communication module 50 to transmit the data transmission request signal to the first communication module 10 in the data recorder that has been determined to be in an environment enabling contactless communication.

The data accumulation method according to the present embodiment will now be described step by step. The data recorder, the communication device, the first communication module 10, the second communication module 50, the first storages 20 to 23, the second storage 60, the first controller 30, the second controller 70, the data transmission request signal, the data, the time information, and the ID information are the same as the corresponding parts of the data accumulation system 300 according to one or more embodiments of the present disclosure and will not be described repeatedly.

The first storing A1 in the present disclosure includes storing the data to be transmitted from the first communication module 10 to the second communication module 50. For example, the first storing A1 is performed with the first storage 20.

The second control A2 in the embodiments of the present disclosure includes accessing the multiple data recorders 101 to 103 at predetermined intervals to determine whether each of the data recorders 101 to 103 can communicate contactlessly, and controlling the second communication module 50 to transmit the data transmission starting signal to the first communication module 10 in the data recorder that has been determined to be in an environment enabling contactless communication. For example, the second control A2 is performed with the second controller 70.

The first control A3 in the embodiments of the present disclosure includes controlling the first communication module 10 to start data transmission from the first communication module 10 to the second communication module 50 in response to the data transmission request signal. The first control A3 may include determining whether contactless communication is enabled when the first communication module 10 receives the data transmission request signal from the second communication module 50. In response to contactless communication being enabled, the first control A3 may include controlling the first communication module 10 to transmit at least one of the time information on data transmission or the ID information from the first communication module 10 to the second communication module 50. For example, the first control A3 is performed with the first controller 30.

The second storing A4 in the embodiments of the present disclosure includes storing the data, the time information, and the ID information that have been received by the second communication module 50. For example, the second storing A4 is performed with the second storage 60.

The data accumulation system according to one or more embodiments of the present disclosure may be used for various communication systems. Such communication systems include, for example, in addition to the cell culture condition management system described above, telephone communication systems for telephone communication, image communication systems for transmitting and receiving various images such as medical images, satellite communication systems for transmitting and receiving information from weather satellites or other satellites, route communication systems for transmitting and receiving information on routes of aircraft or ships, road traffic management systems for transmitting and receiving information on the number of traveling vehicles or traffic congestion, train traffic management systems for controlling the speed or location of trains and subways, commodity management systems for transmitting and receiving sales volume or other information, traffic monitoring systems for monitoring volume of pedestrian traffic, safety management systems for transmitting and receiving information of disasters and crimes from surveillance cameras, planting management systems for transmitting and receiving information of crops on farm land from drones, natural environment monitoring systems for transmitting and receiving information on the natural environment, such as forests and oceans, from drones.

With the data accumulation system according to one embodiment (first aspect) of the present disclosure with the structure described above, although the first communication module in the data recorder cannot communicate contactlessly with the second communication module in the communication device for a period of time, the data is automatically transmitted from the first storage in the data recorder to the communication device through contactless communication once contactless communication is restored. Although contactless communication may not be enabled constantly, automatic data transmission from the data recorder to the communication device is enabled once an environment enabling contactless communication is restored. This may eliminate manual data transfer performed by an operator. This may also reduce the workload of the operator by eliminating continuous monitoring or periodic checking of the capacity status of the internal storage in the data recorder.

In the data accumulation system according to another aspect of the present disclosure, the data transmission request signal is transmitted from the second communication module to the first communication module. When the first communication module receives the data transmission request signal, the first controller determines that contactless communication is enabled. In other words, the first controller determines that contactless communication is enabled when the data transmission request signal is successfully transmitted from the second communication module to the first communication module and is received by the first communication module. This allows automatic determination as to whether to accumulate data in the first storage alone or to transfer the data from the first storage to the communication device in accordance with the state of contactless communication between the first communication module and the second communication module.

In the data accumulation system according to still another aspect of the present disclosure, the second communication module periodically transmits the data transmission request signal to the first communication module, thus requesting initiation of data transmission periodically. This facilitates data transmission from the first communication module to the second communication module before the internal memory in the data recorder overflows.

In the data accumulation system according to still another aspect of the present disclosure, the first communication module transmits data to the second communication module in an environment enabling reception of the data transmission request signal. This simplifies determination as to whether contactless communication is enabled. More specifically, a data transmission request signal from the second communication module cannot start data transmission unless the first communication module receives the data transmission request signal. This reduces unintended data transmission.

The data accumulation system according to still another aspect of the present disclosure may include a plurality of the data recorders, and the communication device further includes the second controller for accessing the plurality of data recorders at predetermined intervals to determine whether each of the data recorders can communicate contactlessly and controlling the second communication module to transmit the data transmission request signal to the first communication module in the data recorder that has been determined to be in an environment enabling contactless communication. This allows determination of the data recorders that are in an environment enabling contactless communication from the plurality of data recorders and automatic transmission of the data stored in the first storage of the data recorder determined to be in an environment enabling contactless communication to the second storage in the communication device. The data recorder that previously cannot communicate contactlessly at one point can automatically transfer data when contactless communication is restored after a predetermined period of time.

In the data accumulation system according to still another aspect of the present disclosure, the first storage stores the time information on data transmission and the ID information on the data recorder. When the first controller determines contactless communication is enabled, the first controller controls the first communication module to transmit at least one of the time information or the ID information from the first communication module to the second communication module. Thus, the communication device may easily retrieve the data by referring to at least one of the time information or the ID information.

The data accumulation system according to another aspect of the present disclosure further includes the second storage for storing the data, the time information, and the ID information received by the second communication module. The communication device may easily retrieve the data after a predetermined period of time passes after the data transferred by referring to at least one of the time information or the ID information stored in the second storage.

With the data accumulation system according to one embodiment (second aspect) of the present disclosure with the structure described above, the first controller determines that contactless communication is enabled when the communication device provides permission to start data transmission in response to the data transmission inquiry signal that has been transmitted from the data recorder to the communication device. For example, the first controller determines that contactless communication is enabled when the data transmission inquiry signal is successfully transmitted from the first communication module to the second communication module and is received by the second communication module. This allows automatic determination as to whether to accumulate data simply in the first storage or to transfer the data from the first storage to the communication device in accordance with the state of contactless communication between the first communication module and the second communication module. Although contactless communication may not be enabled constantly, automatic data transmission from the data recorder to the communication device is enabled once an environment enabling contactless communication is restored. This may eliminate manual data transfer performed by an operator. This may also reduce the workload of the operator by eliminating continuous monitoring or periodic checking of the capacity status of the internal storage in the data recorder.

The data accumulation method according to one or more embodiments of the present disclosure includes processes described above. Although the first communication module in the data recorder and the second communication module in the communication device cannot communicate contactlessly for a period of time, the data may be automatically transmitted from the data recorder to the communication device through contactless communication once contactless communication is restored. Although contactless communication may not be enabled constantly, automatic data transmission from the data recorder to the communication device is enabled once an environment enabling contactless communication is restored. This may eliminate manual data transfer performed by an operator. This may also reduce the workload of the operator by eliminating continuous monitoring or periodic checking of the capacity status of the internal storage in the data recorder.

When the first communication module in the data recorder and the second communication module in the communication device cannot communicate contactlessly for a period of time, the data accumulation system and the data accumulation method according to one or more embodiments of the present disclosure described above can save the workload of an operator for waiting until contactless communication is restored and manually transferring data from the first storage in the data recorder to the communication device. This may also reduce the workload of the operator by eliminating continuous monitoring or periodic checking of the capacity status of the internal storage in the data recorder.

Although the present disclosure is described in detail, the present disclosure is not limited to the embodiments described above, and may be changed or modified in various manners without departing from the spirit and scope of the present disclosure. The components described in the above embodiments may be entirely or partially combined as appropriate unless any contradiction arises.

### Reference Signs List

10 first communication module
20, 21, 22, 23 first storage
30 first controller
50 second communication module
60 second storage
70 second controller
100, 101, 102, 103 data recorder
200 communication device
300 data accumulation system

## Claims

1. A data accumulation system, comprising:
a data recorder including a first communication module for contactless communication; and
a communication device including a second communication module for contactless communication with the first communication module, the communication device being configured to output a data transmission request signal and to accumulate data,
wherein the data recorder further includes
a first storage configured to store data to be transmitted from the first communication module to the second communication module, and
a first controller configured to control the first communication module to start transmission of the data in response to the data transmission request signal transmitted from the communication device to the data recorder, and
the first controller starts transmission of the data from the first communication module to the second communication module in response to contactless communication being enabled between the first communication module and the second communication module.

2. The data accumulation system according to claim 1, wherein
the data transmission request signal is transmitted from the second communication module to the first communication module, and
the first controller determines that the contactless communication is enabled in response to the first communication module receiving the data transmission request signal.

3. The data accumulation system according to claim 2, wherein
the second communication module periodically transmits the data transmission request signal to the first communication module.

4. The data accumulation system according to claim 3, wherein
the first communication module transmits data to the second communication module in a communication environment enabling reception of the data transmission request signal.

5. The data accumulation system according to claim 2, wherein
the second communication module transmits the data transmission request signal to the first communication module in response to an unused capacity in the first storage reaching a predetermined value or less.

6. The data accumulation system according to claim 5, wherein
the predetermined value is 50%.

7. The data accumulation system according to any one of claims 2, 5 and 6, wherein
the second communication module transmits the data transmission request signal with a sequentially shorter interval between transmissions to the first communication module until the contactless communication is enabled.

8. The data accumulation system according to any one of claims 2 and 5 to 7, wherein
the second communication module transmits the data transmission request signal with a sequentially longer signal length to the first communication module until the contactless communication is enabled.

9. The data accumulation system according to any one of claims 2 and 5 to 8, wherein
the second communication module transmits the data transmission request signal with a sequentially higher signal strength to the first communication module until the contactless communication is enabled.

10. The data accumulation system according to any one of claims 1 to 9, wherein
the first storage compresses and stores data in the data recorder in response to an unused capacity in the first storage reaching a predetermined value or less.

11. The data accumulation system according to claim 10, wherein
the predetermined value is 50%.

12. The data accumulation system according to any one of claims 2 to 11, further comprising:
a plurality of the data recorders,
wherein the communication device further includes a second controller configured to access the plurality of data recorders at predetermined intervals to determine whether each of the plurality of data recorders is enabled to perform the contactless communication, and the second controller controls the second communication module to transmit the data transmission request signal to a first communication module in a data recorder of the plurality of data recorders determined to be enabled to perform the contactless communication.

13. The data accumulation system according to any one of claims 1 to 12, wherein
the first storage stores time information on transmission of the data and identification information on the data recorder, and
the first controller controls the first communication module to transmit at least one of the time information or the identification information from the first communication module to the second communication module in response to determining that the contactless communication is enabled.

14. The data accumulation system according to claim 13, wherein
the communication device further includes a second storage configured to store the data, the time information, and the identification information received by the second communication module.

15. A data accumulation system, comprising:
a data recorder including a first communication module for contactless communication; and
a communication device including a second communication module for contactless communication with the first communication module, the communication device being configured to accumulate data,
wherein the data recorder further includes
a first storage configured to store data to be transmitted from the first communication module to the second communication module, and
a first controller configured to control the first communication module to start transmission of the data in response to a data transmission inquiry signal transmitted to the communication device, and
the first controller starts transmission of the data from the first communication module to the second communication module in response to the contactless communication being enabled between the first communication module and the second communication module.

16. A data accumulation method implementable with a data accumulation system, the system including
a data recorder including a first communication module for contactless communication, and
a communication device including a second communication module for contactless communication with the first communication module, the communication device being configured to output a data transmission request signal and to accumulate data,
the data accumulation method comprising:
storing data to be transmitted from the first communication module to the second communication module; and
controlling the first communication module to start transmission of the data in response to the data transmission request signal,
wherein the controlling includes starting transmission of the data from the first communication module to the second communication module in response to contactless communication being enabled between the first communication module and the second communication module.
